# EUROPEAN PATENT APPLICATION

(11) **EP 4 395 024 A1**
(43) Date of publication of application: **03.07.2024**
(21) Application number: 22874928.9
(22) Date of filing: 27.09.2022
(51) Int. Cl.: H01M 50/15, H01M 50/553, H01M 50/176

(54) **TOP COVER FOR BATTERY, AND BATTERY**

(30) Priority: 29.09.2021 CN 202122384222 U
(71) Applicant: SVOLT ENERGY TECHNOLOGY CO., LTD, Changzhou, Jiangsu 213200 (CN)
(72) Inventor: YU, Dongpeng, hangzhou, Jiangsu 213200 (CN); YANG, Hongxin, hangzhou, Jiangsu 213200 (CN); LUO, Zhaojun, hangzhou, Jiangsu 213200 (CN); GAO, Fei, hangzhou, Jiangsu 213200 (CN)
(74) Representative: Groth & Co. KB
(86) International application number: PCT/CN2022/121818
(87) International publication number: WO 2023/051543

(57) **Abstract**

Provided are a top cover (100) for a battery, and a battery. The top cover (100) for a battery includes a body (10); and a pole riveting block (20) and a plurality of pole bodies (30), where the plurality of poles bodies (30) are arranged on the body (10), and the plurality of poles bodies (30) are connected to the pole riveting block (20).

## Description

### CROSS-REFERENCE TO RELATED APPLICATION

The disclosure claims the benefit of priority to Chinese Patent Application No. 202122384222.6, filed on September 29, 2021 and entitled "Top cover for battery, and battery", which is incorporated in its entirety herein by reference.

### TECHNICAL FIELD

The disclosure relates to the technical field of batteries, and particularly relates to a top cover for a battery and a battery having the top cover for a battery.

### BACKGROUND

In the related art, a top cover for a battery is connected to an aluminum housing of the battery, so an internal structure of the battery is separated from the outside. The top cover for a battery is used to electrically connect an interior of the battery to the outside. Moreover, the top cover for a battery can transmit an electric current in the battery to the outside. That is, the top cover for a battery can play a role of guiding an electric current.

Only one pole is arranged at the top cover for a battery. If a cell has a small thickness (for example, less than 20 mm), the pole will have a small size, and an area of connection between the pole and the interior of the battery will be too small (for example, an area of welding between the pole and a tab will be too small). Therefore, the cell will have a weak overcurrent capability, so as to affect working performance of the battery.

### SUMMARY OF THE INVENTION

The disclosure aims to solve at least one of the technical problems in the prior art. Therefore, an objective of the disclosure is to provide a top cover for a battery. The top cover for a battery is provided with a plurality of pole bodies such that an overcurrent capability of a cell and working performance of the battery can be improved. Moreover, the plurality of pole bodies may be connected to the same pole riveting block such that the overcurrent capability of the cell and the working performance of the battery can be improved.

The disclosure further provides a battery using the above top cover for a battery.

A top cover for a battery according to Example 1 of the disclosure includes a body; and a pole riveting block and a plurality of pole bodies. The plurality of pole bodies are arranged on the body and connected to the pole riveting block.

The battery according to the disclosure includes the above top cover for a battery.

Some additional aspects and advantages of the disclosure will be provided in the following descriptions and some will become obvious in the following descriptions or can be known by practice of the disclosure.

### BRIEF DESCRIPTION OF THE DRAWINGS

FIG. 1 is a top view of a top cover according to an example of the disclosure;
FIG. 2 is a sectional view of a top cover according to an example of the disclosure;
FIG. 3 is an enlarged view of position A in FIG. 2;
FIG. 4 is a bottom view of a top cover according to an example of the disclosure;
FIG. 5 is a schematic diagram of a top cover according to an example of the disclosure; and
FIG. 6 is a schematic diagram from another angle of a top cover according to the example of the disclosure.

Reference numerals in the description are as follows:
top cover 100,
body 10, mounting hole 11, mounting groove 12, upper plastic 13, seal member 14, lower plastic 15, vent hole 16, weight-reducing groove 17, positive mark 18,
pole riveting block 20,
pole body 30, first sub-pole body 31, second sub-pole body 32, first sub-pole 33, second sub-pole 34, and
explosion-proof valve 40.

### DETAILED DESCRIPTION

Examples of the disclosure will be described in detail below. Instances of the examples are shown in accompanying drawings, throughout which identical or similar reference numerals denote identical or similar elements or elements having identical or similar functions. Examples described with reference to accompanying drawings are illustrative and merely used for explaining the disclosure, instead of being construed as a limitation on the disclosure.

The disclosure will be described in detail below with reference to accompanying drawings and in combination with examples.

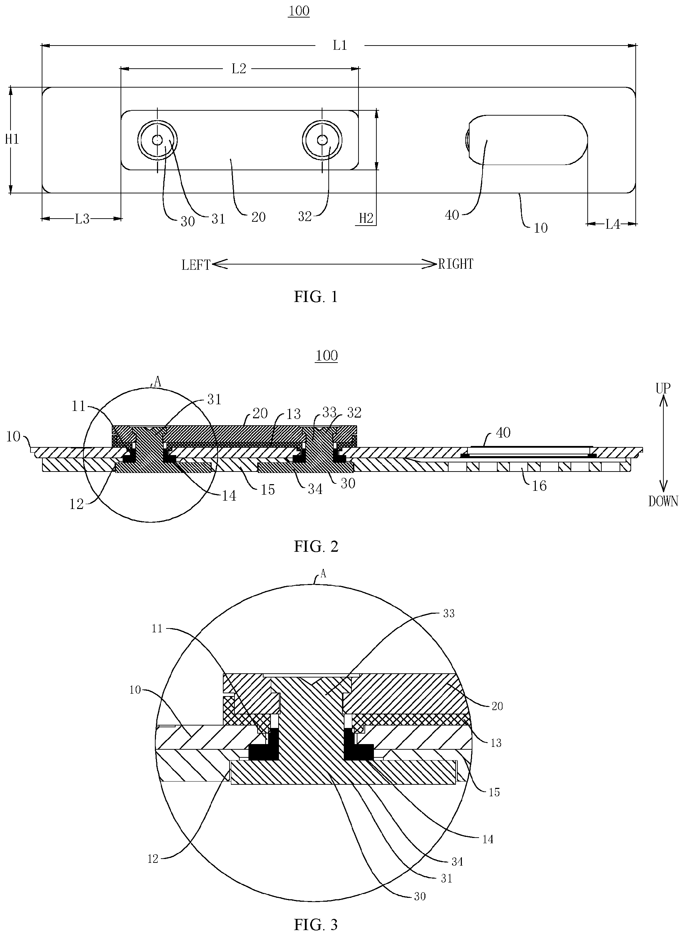

As shown in FIG. 1-FIG. 6, a top cover 100 for a battery according to an example of the disclosure includes a body 10, a pole riveting block 20 and a plurality of pole bodies 30. In some examples, the plurality of pole bodies 30 are arranged on the body 10, and the plurality of pole bodies 30 are connected to the pole riveting block 20.

In some examples, the battery may be a blade battery. The top cover 100 may be welded to an aluminum housing of the battery such that an internal structure of the battery is separated from the outside. Moreover, an end of the pole body 30 away from the pole riveting block 20 may be electrically connected to a tab of the battery, and the pole riveting block 20 may be electrically connected to an external structure of the battery. The top cover 100 can play a role of guiding an electric current, and the top cover 100 can transmit an electric current in the battery to the outside.

Optionally, the pole body 30 may be connected to the pole riveting block 20 through riveting, and then laser welding may be carried out along a riveting edge such that internal resistance of connection between the pole body 30 and the pole riveting block 20 can be reduced.

Optionally, the body 10 may be constructed as a bare aluminum sheet, and the plurality of pole bodies 30 have the same polarity. For instance, the plurality of pole bodies 30 are all positive pole bodies 30, or the plurality of pole bodies 30 are all negative pole bodies 30.

In the prior art, only one pole is arranged at the top cover for a battery. If a cell has a small thickness (for instance, less than 20 mm), the pole will have a small size, and an area of connection between the pole and the interior of the battery will be too small (for instance, an area of welding between the pole and a tab will be too small). Therefore, the cell will have a weak overcurrent capability, so as to affect working performance of the battery.

In the disclosure, by arranging a plurality of pole bodies 30 on the body 10, a total volume of the pole bodies 30 and a sum of cross-sectional areas of the pole bodies 30 can be increased such that an area of connection between the pole bodies 30 and the interior of the battery can be increased (for instance, an area of welding between the pole bodies 30 and a tab can be increased). Therefore, an overcurrent capability of the cell and working performance of the battery can be improved.

Moreover, the plurality of pole bodies 30 may be connected to the same pole riveting block 20, or it can be understood that the pole riveting block 20 is an integrated structure. In this way, a cross-sectional area of the pole riveting block 20 and an area of electrical connection between the pole riveting block 20 and the external structure of the battery can be increased. Therefore, the overcurrent capability of the cell is improved and the battery is ensured to have excellent charge and discharge performance.

Thus, a total volume of the pole bodies 30 and a sum of cross-sectional areas of the pole bodies 30 can be increased by arranging a plurality of pole bodies 30. Therefore, an overcurrent capability of the cell and working performance of the battery can be improved. Moreover, the plurality of pole bodies 30 may be connected to the same pole riveting block 20 such that a cross-sectional area of the pole riveting block 20 can be increased. Therefore, the overcurrent capability of the cell and the working performance of the battery can be improved.

Optionally, as shown in FIG. 2 and FIG. 3, a plurality of mounting grooves 12 may be provided on the body 10. A number of the mounting grooves 12 may be the same as a number of the pole bodies 30. The plurality of mounting grooves 12 may correspond to the plurality of pole bodies 30 in a one-to-one manner. The mounting grooves 12 may be provided on an inner surface of the body 10 opposite an interior of the battery. Moreover, the mounting grooves 12 may be recessed towards the interior of the body 10. At least part of the pole body 30 may be arranged in the mounting groove 12 corresponding thereto. In this way, an internal space of a housing of the battery occupied by the pole bodies 30 can be reduced such that an available space in the housing of the battery, an arrangement space of the cell in the housing, and energy density of the battery can be increased. Moreover, since the mounting grooves 12 are provided on the body 10, weight of the body 10 is reduced, which facilitates a lightweight design of the battery.

In some examples of the disclosure, as shown in FIG. 2 and FIG. 3, a plurality of mounting holes 11 may be provided on the body 10. Optionally, a number of the mounting holes 11 may be the same as a number of the pole bodies 30. The mounting holes 11 may correspond to the mounting grooves 12 in a one-to-one manner. The plurality of pole bodies 30 may be mounted in the mounting holes 11. Moreover, at least part of the pole body 30 may pass through the mounting hole 11 corresponding thereto, so as to be connected to the pole riveting block 20. In this way, a volume of the top cover 100 can be reduced such that the available space in the housing of the battery can be increased, which can improve the energy density of the battery.

In some examples of the disclosure, as shown in FIG. 1-FIG. 6, the plurality of pole bodies 30 may include first sub-pole bodies 31 and second sub-pole bodies 32. In some examples, the first sub-pole bodies 31 and the second sub-pole bodies 32 may be spaced apart from each other in a length direction of the body 10 (that is, in a left-right direction shown in FIG. 1). In this way, arrangement positions of the first sub-pole bodies 31 and the second sub-pole bodies 32 can be reasonable, and interference between the first sub-pole bodies 31 and the second sub-pole bodies 32 can be avoided.

Optionally, as shown in FIG. 2 and FIG. 3, the first sub-pole body 31 and the second sub-pole body 32 may each include a first sub-pole 33 and a second sub-pole 34. The first sub-pole 33 and the second sub-pole 34 may be configured as an integrally formed member. At least part of the second sub-pole 34 may be arranged in the mounting groove 12. The first sub-pole 33 may pass through the mounting hole 11 to be connected to the pole riveting block 20.

Optionally, as shown in FIG. 2 and FIG. 3, lower plastic 15 may be arranged between the second sub-pole 34 and the body 10. Insulation and protection may be carried out between the second sub-pole 34 and the body 10 by means of the lower plastic 15. Upper plastic 13 may be arranged between the pole riveting block 20 and the body 10. Insulation and protection may be carried out between the pole riveting block 20 and the body 10 by means of the upper plastic 13. A seal member 14 may be arranged between the first sub-pole 33 and the mounting hole 11. In some examples, the seal member 14 may be configured as a rubber ring. A position of contact between the first sub-pole 33 and the mounting hole 11 may be sealed by means of the rubber ring. In this way, working reliability and usage safety of the top cover 100 can be ensured.

In some examples of the disclosure, as shown in FIG. 1, a length of the body 10 may be L1, a length of the pole riveting block 20 may be L2, and the length of the body 10 and the length of the pole riveting block 20 may satisfy a relational expression as follows: 0.3≤L2/L1≤0.5. That is, a ratio of the length of the pole riveting block 20 to the length of the body 10 may be any numerical value between 0.3 and 0.5. For instance, if the length of the body 10 is 90 mm, the length of the pole riveting block 20 may be any numerical value between 27 mm and 45 mm. For instance, the length of the pole riveting block 20 may be 36 mm. In this way, the ratio of the length of the pole riveting block 20 to the length of the body 10 may be reasonable such that usage safety of the battery can be ensured on the basis that an overcurrent capability of a cell is improved.

In some examples of the disclosure, as shown in FIG. 1, FIG. 2 and FIG. 5, the top cover 100 may further include an explosion-proof valve 40. The explosion-proof valve 40 may be arranged on the body 10. A protective film may be arranged on the explosion-proof valve 40. In some examples, when thermal runaway occurs on the battery, the explosion-proof valve 40 can quickly carry out ventilation, pressure relief and explosion proofing, such that the problem of self-explosion of the battery is solved to a certain extent.

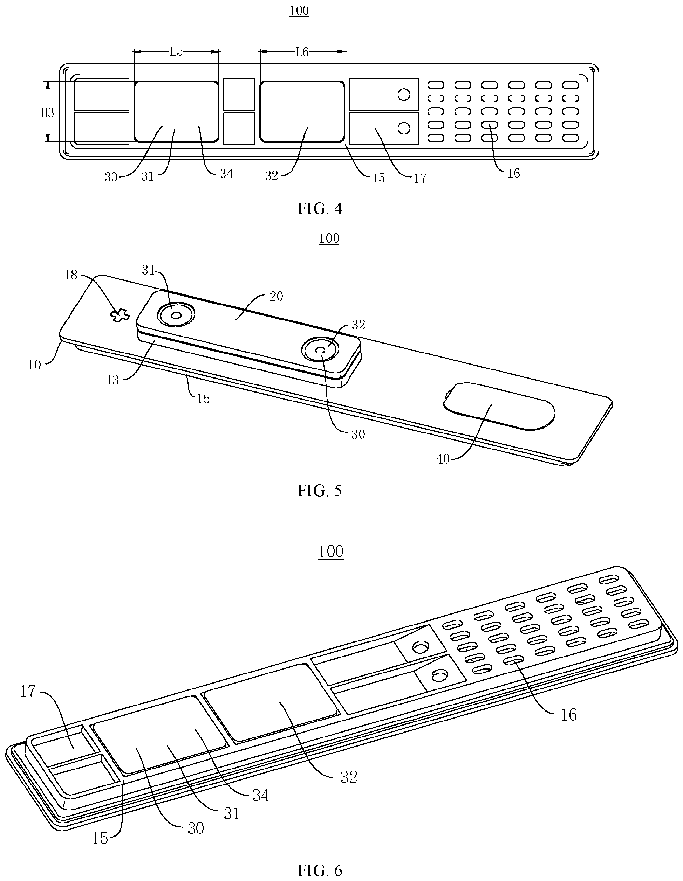

Optionally, as shown in FIG. 2 and FIG. 4, in a thickness direction (that is, an up-down direction shown in FIG. 2) of the top cover 100, a plurality of vent holes 16 may be provided at positions of the lower plastic 15 opposite the explosion-proof valve 40. In this way, when thermal runaway occurs on the battery, the explosion-proof valve 40 can quickly carry out ventilation and pressure relief.

Optionally, as shown in FIG. 6, a plurality of weight-reducing grooves 17 may be provided on the lower plastic 15. In this way, weight of the top cover 100 can be reduced such that a lightweight design of the battery is facilitated. Moreover, materials are saved such that cost is reduced.

In some examples, the body 10 has a first end and a second end that are opposite each other in a length direction (that is, a left-right direction as shown in FIG. 1) of the body 10. In some examples, a left end of the body 10 may be the first end of the body 10, and a right end of the body 10 may be the second end of the body 10.

As shown in FIG. 1, a distance between an end of the pole riveting block 20 away from the explosion-proof valve 40 and the first end may be L3, a length of the body 10 may be L1, and L3 and L1 may satisfy a relational expression as follows: 0.1≤L3/L1≤0.3. That is, a ratio of L3 to L1 may be any numerical value between 0.1 and 0.3. For instance, if the length of the body 10 is 90 mm, a distance between an end of the pole riveting block 20 away from the explosion-proof valve 40 and the first end may be any numerical value between 9 mm and 27 mm.

In some other examples, as shown in FIG. 1, a distance between an end of the explosion-proof valve 40 away from the pole riveting block 20 and the second end may be L4, and L4 and L1 may satisfy a relational expression as follows: 0.05≤L4/L1≤0.3. That is, a ratio of L4 to L1 may be any numerical value between 0.05 and 0.3. For instance, if the length of the body 10 is 90 mm, the distance between an end of the explosion-proof valve 40 away from the pole riveting block 20 and the second end may be any numerical value between 4.5 mm and 27 mm. In this way, a ratio of L3 to L1 may be reasonable, and a ratio of L4 to L1 is reasonable. Therefore, arrangement positions of the pole riveting block 20 and the explosion-proof valve 40 can be reasonable, and usage reliability of the battery can be ensured.

In some examples of the disclosure, as shown in FIG. 1, a width of the body 10 may be H1, a width of the pole riveting block 20 may be H2, and the width of the body 10 and the width of the pole riveting block 20 may satisfy a relational expression as follows: 0.5≤H2/H1≤0.9. That is, a ratio of the width of the pole riveting block 20 to the width of the body 10 may be any numerical value between 0.5 and 0.9. In this way, the ratio of the width of the pole riveting block 20 to the width of the body 10 may be reasonable such that usage safety of the battery can be ensured on the basis that an overcurrent capability of a cell is improved.

In some examples of the disclosure, as shown in FIG. 1 and FIG. 4, a length of the first sub-pole body 31 may be L5, and a length of the second sub-pole body 32 may be L6. In some examples, a length of the second sub-pole 34 of the first sub-pole body 31 may be L5, a length of the second sub-pole 34 of the second sub-pole body 32 may be L6, a length of the pole riveting block 20 may be L2, and L5, L6, and L2 may satisfy a relational expression as follows: 0.5≤(L5+L6)/L2≤1.5. Optionally, the length of the second sub-pole 34 of the first sub-pole body 31 may be the same as the length of the second sub-pole 34 of the second sub-pole body 32 (that is, L5 may be equal to L6), or the length of the second sub-pole 34 of the first sub-pole body 31 may be different from the length of the second sub-pole 34 of the second sub-pole body 32 (that is, L5 may not be equal to L6). In this way, a numerical relation between L5, L6 and L2 may be reasonable, such that the battery is ensured to have excellent charge and discharge performance.

In some examples of the disclosure, as shown in FIG. 4, the width of the first sub-pole body 31 may be H3, the width of the second sub-pole body 32 may be H3, or the width of the first sub-pole body 31 and the width of the second sub-pole body 32 may be H3. In some examples, the width of the first sub-pole body 31 and the width of the second sub-pole body 32 may be H3. In some examples, the width of the second sub-pole 34 of the first sub-pole body 31 may be H3, and the width of the second sub-pole 34 of the second sub-pole body 32 may be H3.

Furthermore, H3 and H1 may satisfy a relational expression as follows: 0.5≤H3/H1≤0.8. That is, a ratio of H3 to H1 may be any numerical value between 0.5 and 0.8. In this way, a ratio of the width of the first sub-pole body 31 and the width of the second sub-pole body 32 to the width of the body 10 may be reasonable such that usage safety of the battery can be ensured on the basis that an overcurrent capability of a cell is improved.

As some examples of the disclosure, an end of the first sub-pole body 31 and an end of the second sub-pole body 32 which are away from the pole riveting block 20 may be of a separate structure. That is, the first sub-pole body 31 and the second sub-pole body 32 are directly welded to a tab of the battery. In this way, it is not required to connect the first sub-pole body 31 and the second sub-pole body 32 together and then weld same to the tab of the battery such that assembly difficulty of the battery can be reduced, and assembly efficiency of the battery can be increased.

As some examples of the disclosure, as shown in FIG. 5, a positive mark 18 or a negative mark may be arranged on the body 10. Optionally, the positive mark 18 may be configured as a cross-shaped groove, and the negative mark may be configured as a rectangular groove. By arranging the positive mark 18 or the negative mark on the body 10, it is convenient for an operator to distinguish positive and negative polarities of the pole body 30 on the top cover 100, so as to facilitate assembly of the battery pack.

As some examples of the disclosure, as shown in FIG. 1, the plurality of pole bodies 30 are all located on one side of the explosion-proof valve 40 in the left-right direction shown in FIG. 1. For instance, in an instance shown in FIG. 1, the plurality of pole bodies 30 are all located on a left side of the explosion-proof valve 40, such that arrangement positions of the plurality of pole bodies 30 and the explosion-proof valve 40 can be reasonable, and usage reliability of the top cover 100 can be ensured.

The battery according to an example of the disclosure includes the top cover 100 of the battery in the above example. By arranging a plurality of pole bodies 30, a total volume of the pole bodies 30 and a sum of cross-sectional areas of the pole bodies 30 can be increased. Therefore, an overcurrent capability of a cell and working performance of the battery can be improved. Moreover, the plurality of pole bodies 30 can be connected to the same pole riveting block 20 such that a cross-sectional area of the pole riveting block 20 can be increased. Therefore, the overcurrent capability of the cell and the working performance of the battery can be improved.

In the description, the description with reference to the terms "an example", "some examples", "examples", "instances", "particular instances", or "some instances", etc. means that a specific feature, structure, material or characteristic described in combination with the example or instance is included in at least one example or instance of the disclosure. In the description, schematic expressions of the above terms do not certainly refer to the same example or instance. Moreover, the specific feature, structure, material or characteristic described can be combined in a suitable manner in any one or more examples or instances.

Although examples of the disclosure are shown and described, those of ordinary skill in the art can understand that various changes, modifications, replacements and variations can be made to these examples without departing from the principles and purposes of the disclosure, and the scope of the disclosure is limited by the claims and their equivalents.

## Claims

1. A top cover for a battery, comprising:
a body; and
a pole riveting block and a plurality of pole bodies, wherein the plurality of pole bodies are arranged on the body, and the plurality of pole bodies are connected to the pole riveting block.

2. The top cover for a battery according to claim 1, wherein the body is provided with a plurality of mounting holes, the plurality of pole bodies are mounted in the mounting holes, and the pole bodies pass through the mounting holes corresponding to the pole bodies so as to be electrically connected to the pole riveting block.

3. The top cover for a battery according to claim 1, wherein the plurality of pole bodies comprise first sub-pole bodies and second sub-pole bodies, the first sub-pole bodies and the second sub-pole bodies are spaced apart from each other in a length direction of the body.

4. The top cover for a battery according to claim 1, wherein a length of the body is L1, a length of the pole riveting block is L2, and a following relational expression is satisfied: 0.3≤L2/L1≤0.5.

5. The top cover for a battery according to claims 1-4, further comprising an explosion-proof valve, wherein the explosion-proof valve is arranged on the body, the body has a first end and a second end that are opposite each other in the length direction of the body, a distance between an end of the pole riveting block away from the explosion-proof valve and the first end is L3, the length of the body is L1, and a following relational expression is satisfied: 0.1≤L3/L1≤0.3.

6. The top cover for a battery according to claim 5, wherein a distance between the end of the explosion-proof valve away from the pole riveting block and the second end is L4, and a following relational expression is satisfied: 0.05≤L4/L1≤0.3.

7. The top cover for a battery according to claims 1-6, wherein a width of the body is H1, a width of the pole riveting block is H2, and a following relational expression is satisfied: 0.5≤H2/H1≤0.9.

8. The top cover for a battery according to claim 3, wherein a length of the first sub-pole body is L5, a length of the second sub-pole body is L6, a length of the pole riveting block is L2, and a following relational expression is satisfied: 0.5≤(L5+L6)/L2≤1.5.

9. The top cover for a battery according to claim 7, wherein a width of the first sub-pole body is H3, a width of the second sub-pole body is H3, and a following relational expression is satisfied: 0.5≤H3/H1≤0.8.

10. A battery, comprising the top cover for a battery according to any one of claims 1-9.
